# EUROPÄISCHE PATENTSCHRIFT

(11) **EP 2 529 650 B1**
(45) Veröffentlichungstag und Bekanntmachung des Hinweises auf die Patenterteilung: **25.12.2013**
(21) Anmeldenummer: 12167604.3
(22) Anmeldetag: 11.05.2012
(51) Int. Cl.: A47J 43/046, A47J 43/07

(54) **Verfahren zur Freigabe eines Deckels eines Zubereitungsgefäßes sowie Küchenmaschine mit einem Gargefäß**
Method for releasing a lid of a supply vessel and kitchen appliance with a cooking container
Procédé de libération d'un couvercle d'un récipient de préparation ainsi que machine de cuisine avec récipient de cuisson

(30) Priorität: 31.05.2011 DE 102011050743
(43) Veröffentlichungstag der Anmeldung: 05.12.2012
(73) Patentinhaber: Vorwerk & Co. Interholding GmbH, 42275 Wuppertal (DE)
(72) Erfinder: Lang, Torsten, 42657 Solingen (DE)
(74) Vertreter: Müller, Enno

(56) Entgegenhaltungen:
- EP-A1- 0 638 273
- WO-A1-2012/041660
- DE-A1-102005 028 758

## Beschreibung

Die Erfindung betrifft zunächst ein Verfahren zur Freigabe eines Deckels eines Zubereitungsgefäßes, insbesondere ein mit einem Rührwerk versehenes und/oder aufheizbares Gargefäß, wobei Rührwerk- und/oder Aufheizdaten erfassbar und abspeicherbar sind.

Verfahren der in Rede stehenden Art sind bekannt. Diese finden bevorzugt Verwendung bei Gefäßen zur Zubereitung von Speisen, weiter bevorzugt Verwendung bei Gargefäßen, welche beispielsweise einer elektrischen Küchenmaschine zuordbar sind. Derartige Gefäße verfügen bevorzugt über eine Aufheizeinrichtung, zur entsprechenden Aufheizung des in dem Gefäß befindlichen Gargutes, und/oder über ein, weiter bevorzugt in dem Gefäß vorgesehenes Rührwerk, welches weiter bevorzugt elektrisch angetrieben wird und bevorzugt zur Durchmengung des in dem Gefäß befindlichen Gargutes dient. Entsprechend sind weiter Gefäße bekannt, welche sowohl über eine Aufheizeinrichtung als auch über ein Rührwerk verfügen, wobei weiter bekannt ist, die Aufheizeinrichtung in dem Gefäß vorzusehen, beispielsweise in Form einer insbesondere bodenseitig vorgesehenen Widerstandsheizung. Weiter sind diesbezüglich Lösungen bekannt, bei welchen eine indirekte Aufheizung des in dem Gefäß befindlichen Gargutes durch die Gargefäßwandung hindurch erfolgt. Weiter ist bekannt, die Rührwerk- und/oder Aufheizdaten insbesondere im Zuge des Gar- und/oder Rührprozesses zu erfassen und abzuspeichern.

Da insbesondere bei einem Verrühren des in dem Gefäß befindlichen Gargutes mittels des Rührwerkes zufolge Trombenbildung das Gargut gegebenenfalls von innen gegen den das Gefäß überdeckenden Deckel drückt, ist dieser, wie aus dem Stand der Technik weiter bekannt, im Betrieb des Rührwerks und/oder der Heizung bevorzugt verriegelt. Eine gegebenenfalls vorgenommene Aufheizung des Gargutes kann ebenso zu einer entsprechenden Druckerhöhung führen bzw. in Zusammenwirkung mit dem rotierenden Rührwerk zu einer weiteren Druckerhöhung führen. Die insbesondere durch das rotierende Rührwerk gebildete Trombe bildet sich insbesondere abhängig von der Ausgestaltung des Rührwerkes und der Drehzahl desselben nach dem Abschalten des das Rührwerk antreibenden Elektromotors nur langsam zurück. Wird der Deckel vorzeitig geöffnet, kann heißes Gargut austreten, was zu Verletzungen, insbesondere Verbrühungen bei der Bedienperson führen kann.

Im Hinblick auf den zuvor beschriebenen Stand der Technik wird eine technische Problematik der Erfindung darin gesehen, ein Verfahren der in Rede stehenden Art weiter zu verbessern.

Diese Problematik ist durch den Gegenstand des Anspruches 1 gelöst, wobei darauf abgestellt ist, dass die Freigabe des Deckels in Abhängigkeit einer Auswertung der aufgezeichneten Daten, betreffend einen vorgegebenen Zeitraum, vorgenommen wird. Die aufgezeichneten Daten werden entsprechend genutzt, um den Deckel erst dann freizugeben, wenn sich für die Bedienperson keine Gefahr beispielsweise durch Verbrühungen oder dergleichen ergibt. Unter Freigabe des Deckels ist hierbei zu verstehen, dass eine bevorzugte Verriegelung desselben aufgehoben ist oder durch die Bedienperson aufhebbar ist. So kann nach einer entsprechenden Deckelfreigabe dieser bevorzugt unmittelbar von der Bedienperson beispielsweise abgehoben werden. Auch ist bevorzugt nach einer entsprechenden Deckelfreigabe eine den Deckel insbesondere mit dem Gefäß verriegelnde Einrichtung aus einer Verriegelungsstellung in eine Freigabestellung zu verlagern, wonach dann der Deckel abnehmbar ist. Hierbei ist weiter bevorzugt eine Verlagerung eines Verriegelungselementes aus der Verriegelungsstellung in die Freigabestellung manuell durch die Bedienperson herbeiführbar, alternativ, wie weiter bevorzugt, zufolge elektromotorischer Steuerung. Die während des Zubereitungsprozesses aufgezeichneten Daten wie Drehzahlen des Rührwerks und/oder bevorzugt die Aufheiztemperatur, weiter bevorzugt auch die Garguttemperatur und/oder bevorzugt der Temperaturanstieg über einen vorgegebenen Zeitraum, werden zur Ermittlung einer möglichen Freigabe des Deckels insbesondere nach einem Abschalten des Rührwerkes und/oder der Aufheizeinrichtung genutzt. Dies weiter bevorzugt über einen vorgegebenen Zeitraum, bevorzugt über einen Zeitraum von einer Sekunde bis hin zu einer Minute vor einem Abschalten des Rührwerks und/oder der Aufheizeinrichtung. Diese aufgezeichneten Daten lassen Rückschlüsse zu insbesondere auf die Trombenausbildung, entsprechend weiter bevorzugt auf die Zeit, bis sich die Trombe insbesondere nach einem Abschalten des Rührwerks wieder zurückgebildet hat. Erst nach Ablauf einer sich aus den aufgezeichneten Daten ergebenden Nachlaufzeit bzw. Absenkzeit der Trombe wird der Deckel zur Verlagerung eines Verriegelungselementes oder unmittelbar zum Abheben des Deckels freigegeben. Bei einer bevorzugten Anordnung des Gefäßes in einer Küchenmaschine erfolgt die Auswertung der aufgezeichneten Daten und die Ermittlung einer möglichen Absenkzeit der Trombe über eine küchenmaschinenseitig vorgesehene Steuer- und Auswerteeinheit. Anhand der aufgezeichneten Daten ist eine Freigabe des Deckels nach Ablauf einer hieraus berechneten Zeitspanne nach Ausschalten des Gerätes bzw. nach Ausschalten des Rührwerks und/oder Aufheizeinrichtung vorgenommen. Lassen die aufgezeichneten Daten Rückschlüsse darauf zu, dass sich keine in Richtung auf die Unterseite des Deckels sich erstreckende Trombe ausgebildet hat, die beim Abnehmen des Deckels zu einem Herausspritzen von Gargut führen könnte, wird bevorzugt die Freigabe des Deckels unmittelbar mit Abschalten des Rührwerks und/ oder der Aufheizeinrichtung vorgenommen. Bei aufgezeichneten höheren Drehzahlen und/oder höheren Temperaturen (Aufheiztemperatur und/oder Garguttemperatur) wird die Freigabe des Deckels bevorzugt verzögert vorgenommen, so weiter bevorzugt mit einer Verzögerung von zwei Sekunden bis hin zehn Sekunden.

In weiter bevorzugter Ausgestaltung fließen auch Werte hinsichtlich der Konsistenz des in dem Gefäß befindlichen Gargutes in die aufgezeichneten Daten ein. Die Konsistenz ist hierbei bevorzugt ermittelbar zufolge des sich beispielsweise bei einem zähen Gargut, beispielsweise breiartiges Gargut, einstellenden erhöhten Motorstroms des das Rührwerk antreibenden Elektromotors. Hierbei bildet ein zähflüssiges Gargut bei gleicher Rührwerkdrehzahl eine weniger hohe Trombe aus als ein dünnflüssiges Gargut, wie bspw. eine Suppe.

Um für die Bedienperson keine unnötige Wartezeit entstehen zu lassen, ist in einer weiter bevorzugten Ausgestaltung vorgesehen, dass die gespeicherten Daten mit vorgegebenen, empirisch ermittelten Daten verglichen werden. Mit Hilfe der bevorzugt über einen vorgegebenen Zeitraum aufgezeichneten Daten insbesondere der Rührwerkdrehzahl und/oder der Aufheiz- bzw. Garguttemperatur kann entsprechend bevorzugt über die empirisch ermittelte und weiter bevorzugt in der Elektronik eines das Gefäß aufnehmenden Gerätes hinterlegte Tabelle abgeleitet werden, wie lange insbesondere sich die durch die Rührwerkdrehung erzeugte Trombe nach einem Abschalten des Rührwerks benötigt, um sich zurückzubilden. Entsprechend wird eine Verzögerung der Freigabe des Deckels um die ermittelte Zeitspanne der Trombenrückbildung vorgenommen. Die empirisch ermittelten Daten sind bevorzugt in einem nicht flüchtigen Speicher hinterlegt.

Die Erfindung betrifft weiter eine Küchenmaschine mit einem Gargefäß und einem Rührwerk in dem Gargefäß und/oder einer Aufheizeinrichtung zum Aufheizen des in dem Gargefäß befindlichen Gargutes, wobei Rührwerk- und/oder Aufheizdaten erfassbar und abspeicherbar sind, wobei weiter eine Einrichtung zur Freigabe einer Verriegelung eines das Gargefäß abdeckenden Deckels vorgesehen ist.

Küchenmaschinen der in Rede stehenden Art sind bekannt, so beispielsweise aus der DE 10 2005 028 758 A1 oder auch der deutschen Patentanmeldung mit dem Aktenzeichen DE 10 2010 037 892 (siehe WO 2012 041660 A1). Diese Küchenmaschinen finden bevorzugt Verwendung zur Zubereitung von Speisen. Die der Küchenmaschine zuzuordnenden Gefäße verfügen bevorzugt über eine Aufheizeinrichtung, zur entsprechenden Aufheizung des in dem Gefäß befindlichen Gargutes, und/ oder über ein, weiter bevorzugt in dem Gefäß vorgesehenes Rührwerk, welches weiter bevorzugt elektrisch angetrieben wird und bevorzugt zur Durchmengung des in dem Gefäß befindlichen Gargutes dient. Entsprechend sind weiter Küchenmaschinen bekannt, deren Gefäße sowohl über eine Aufheizeinrichtung als auch über ein Rührwerk verfügen, wobei weiter bekannt ist, die Aufheizeinrichtung in dem Gefäß vorzusehen, beispielsweise in Form einer insbesondere bodenseitig vorgesehenen Widerstandsheizung. Weiter sind diesbezüglich Lösungen bekannt, bei welchen eine indirekte Aufheizung des in dem Gefäß befindlichen Gargutes durch die Gargefäßwandung hindurch erfolgt. Weiter ist bekannt, die Rührwerk- und/oder Aufheizdaten insbesondere im Zuge des Gar- und/ oder Rührprozesses zu erfassen und abzuspeichern.

Im Hinblick auf den zuvor beschriebenen Stand der Technik wird eine technische Problematik der Erfindung darin gesehen, eine Küchenmaschine der in Rede stehenden Art insbesondere hinsichtlich der Freigabe der Deckelverriegelung weiter zu verbessern.

Diese Problematik ist durch den Gegenstand des Anspruches 3 gelöst, wobei darauf abgestellt ist, dass ausgehend von einem Ereignis, insbesondere einem Abschalten des Rührwerks und/oder der Aufheizeinrichtung der Küchenmaschine von der Küchenmaschine eine Zeitspanne errechenbar ist, nach welcher die Freigabe der Verriegelung des Deckels erfolgt. Die aufgezeichneten Daten werden entsprechend genutzt, um den Deckel erst dann freizugeben, wenn sich für die Bedienperson keine Gefahr beispielsweise durch Verbrühungen oder dergleichen ergibt. Unter Freigabe des Deckels ist hierbei zu verstehen, dass eine bevorzugte Verriegelung desselben aufgehoben ist oder durch die Bedienperson aufhebbar ist. So kann nach einer entsprechenden Deckelfreigabe dieser bevorzugt unmittelbar von der Bedienperson beispielsweise abgehoben werden. Auch ist bevorzugt nach einer entsprechenden Deckelfreigabe eine den Deckel insbesondere mit dem Gefäß verriegelnde Einrichtung aus einer Verriegelungsstellung in eine Freigabestellung zu verlagern, wonach dann der Deckel abnehmbar ist. Hierbei ist weiter bevorzugt eine Verlagerung eines Verriegelungselementes aus der Verriegelungsstellung in die Freigabestellung manuell durch die Bedienperson herbeiführbar, alternativ, wie weiter bevorzugt, zufolge elektromotorischer Steuerung. Die während des Zubereitungsprozesses aufgezeichneten Daten wie Drehzahlen des Rührwerks und/oder bevorzugt die Aufheiztemperatur, weiter bevorzugt auch die Garguttemperatur und/oder bevorzugt der Temperaturanstieg über einen vorgegebenen Zeitraum, werden zur Berechnung einer Zeitspanne bis zur Freigabe des Deckels insbesondere nach einem Abschalten des Rührwerkes und/oder der Aufheizeinrichtung genutzt. Dies weiter bevorzugt über einen vorgegebenen Zeitraum, bevorzugt über einen Zeitraum von einer Sekunde bis hin zu einer Minute vor einem Abschalten des Rührwerks und/oder der Aufheizeinrichtung. Diese aufgezeichneten Daten lassen Rückschlüsse zu insbesondere auf die Trombenausbildung, entsprechend weiter bevorzugt auf die Zeitspanne, bis sich die Trombe insbesondere nach einem Abschalten des Rührwerks wieder zurückgebildet hat. Erst nach Ablauf einer sich aus den aufgezeichneten Daten ergebenden Nachlaufzeit bzw. Absenkzeit der Trombe ist der Deckel zur Verlagerung eines Verriegelungselementes oder unmittelbar zum Abheben des Deckels freigegeben. Die Auswertung der aufgezeichneten Daten und die Berechnung einer möglichen Absenkzeit der Trombe erfolgt bevorzugt über eine küchenmaschinenseitig vorgesehene Steuer- und Auswerteeinheit. Anhand der aufgezeichneten Daten erfolgt eine Freigabe des Deckels nach Ablauf einer hieraus berechneten Zeitspanne nach Ausschalten des Gerätes bzw. nach Ausschalten des Rührwerks und/oder Aufheizeinrichtung. Lassen die aufgezeichneten Daten Rückschlüsse darauf zu, dass sich keine in Richtung auf die Unterseite des Deckels sich erstreckende Trombe ausgebildet hat, die beim Abnehmen des Deckels zu einem Herausspritzen von Gargut führen könnte, erfolgt bevorzugt die Freigabe des Deckels unmittelbar mit Abschalten des Rührwerks und/oder der Aufheizeinrichtung. Bei aufgezeichneten höheren Drehzahlen und/oder höheren Temperaturen (Aufheiztemperatur und/oder Garguttemperatur) erfolgt die Freigabe des Deckels bevorzugt verzögert, so weiter bevorzugt mit einer Verzögerung von zwei Sekunden bis hin zehn Sekunden.

In weiter bevorzugter Ausgestaltung fließen auch Werte hinsichtlich der Konsistenz des in dem Gefäß befindlichen Gargutes in die aufgezeichneten Daten ein. Die Konsistenz ist hierbei bevorzugt ermittelbar zufolge des sich beispielsweise bei einem zähen Gargut, beispielsweise breiartiges Gargut, einstellenden erhöhten Motorstroms des das Rührwerk antreibenden Elektromotors.

Hierbei bildet ein zähflüssiges Gargut bei gleicher Rührwerkdrehzahl eine weniger hohe Trombe aus als ein dünnflüssiges Gargut, wie bspw. eine Suppe.

Um für die Bedienperson keine unnötige Wartezeit entstehen zu lassen, ist in einer weiter bevorzugten Ausgestaltung vorgesehen, dass die gespeicherten Daten mit vorgegebenen, empirisch ermittelten Daten verglichen werden. Mit Hilfe der bevorzugt über einen vorgegebenen Zeitraum aufgezeichneten Daten insbesondere der Rührwerkdrehzahl und/oder der Aufheiz- bzw. Garguttemperatur kann entsprechend bevorzugt über die empirisch ermittelte und weiter bevorzugt in der Elektronik eines das Gefäß aufnehmenden Gerätes hinterlegte Tabelle abgeleitet werden, wie lange insbesondere sich die durch die Rührwerkdrehung erzeugte Trombe nach einem Abschalten des Rührwerks benötigt, um sich zurückzubilden. Entsprechend erfolgt eine Verzögerung der Freigabe des Deckels um die ermittelte Zeitspanne der Trombenrückbildung. Die empirisch ermittelten Daten sind bevorzugt in einem nicht flüchtigen Speicher hinterlegt.

Nachstehend ist die Erfindung anhand der beigefügten Zeichnung, welche lediglich ein Ausführungsbeispiel darstellt, näher erläutert. Es zeigt:
- Fig. 1: in Seitenansicht eine Küchenmaschine mit einem Gargefäß und einem an dem Gargefäß verriegelten Deckel für das Gargefäß;

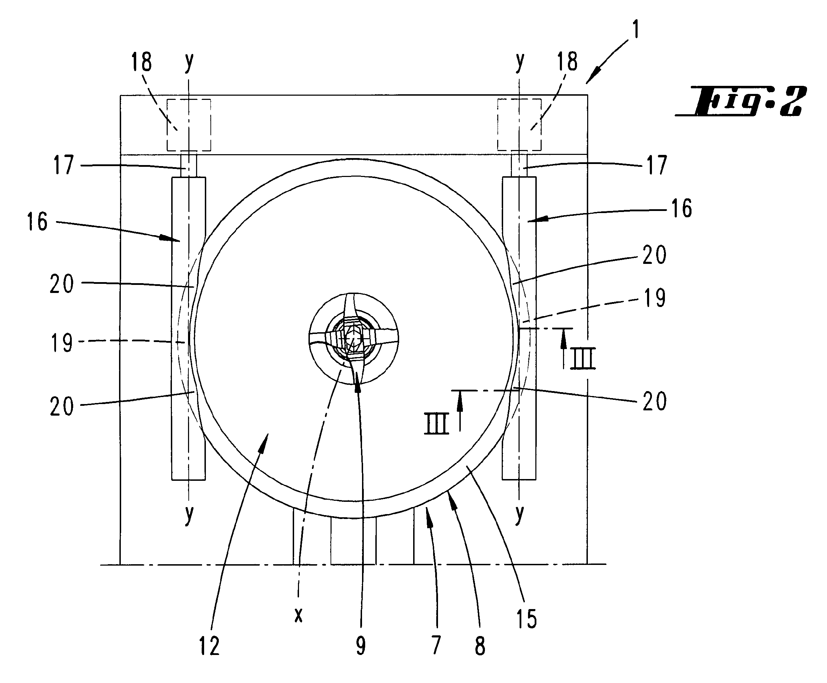

- Fig. 2: die Draufsicht hierzu, den Verriegelungszustand des Deckels betreffend;
- Fig. 3: den Schnitt gemäß der Linie III - III in Fig. 2;
- Fig. 4: eine der Fig. 3 entsprechende Darstellung, jedoch die Freigabe des Deckels betreffend;
- Fig. 5: eine der Fig. 4 entsprechende Darstellung, im Zuge eines Abhebens des Deckels vom Rührgefäß;
- Fig. 6: eine der Fig. 1 entsprechende, jedoch partiell geschnittene Darstellung, das deckelverschlossene Gargefäß im Rührwerkbetrieb betreffend und
- Fig. 7: ein Diagramm zur Darstellung des Verfahrens.

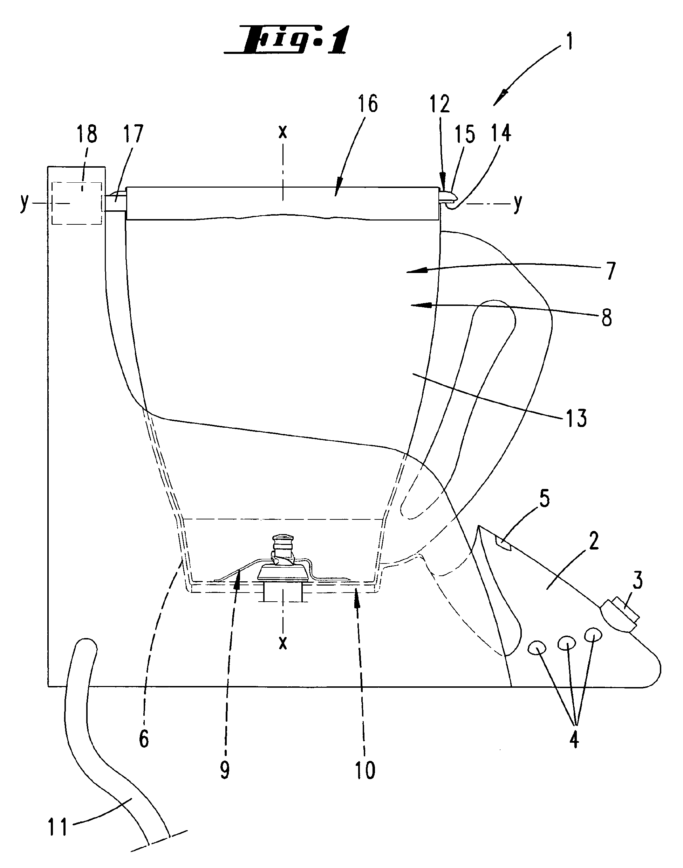

Dargestellt und beschrieben ist zunächst mit Bezug zu Figur 1 eine elektrisch betriebene Küchenmaschine 1. Diese weist zunächst ein Bedienfeld 2 auf mit bevorzugt einer Mehrzahl von Reglern 3 oder Tastern 4, sowie bevorzugt ein Display 5 zum Anzeigen der insbesondere über die Regler und/oder Taster 3, 4 einzustellenden Parameter. Bevorzugt ist über den Regler 3 eine Rührwerkdrehzahl einstellbar und über den oder die Taster 4 die Temperatur einer Aufheizeinrichtung.

Des Weiteren verfügt die Küchenmaschine 1 über eine Gargefäßaufnahme 6. In diese ist ein Zubereitungsgefäß 7 in Form eines Gargefäßes 8 insbesondere im Fußbereich desselben bevorzugt formschlüssig aufnehmbar und halterbar. Das Gargefäß 8 ist bevorzugt im Wesentlichen rotationssymmetrisch ausgebildet, mit einer zentralen Vertikalachse x.

Im Bodenbereich weist das Gargefäß 8 bevorzugt ein Rührwerk 9 auf. Dieses ist in der Zuordnungsstellung des Gargefäßes 8 in der Gefäßaufnahme 6 formschlüssig gekoppelt mit einem in der Küchenmaschine 1 vorgesehenen, weiter bevorzugt elektromotorisch betriebenen Rührwerkantrieb.

Die Elektroversorgung des Rührwerkantriebes sowie einer weiter bevorzugt behälterbodenseitig vorgesehenen Aufheizeinrichtung 10 und darüber hinaus auch der elektrischen Steuerung der gesamten Küchenmaschine 1 ist über ein Netzanschlusskabel 11 erreicht.

Das Gargefäß ist weiter insbesondere im Betrieb des Rührwerks 9 und/oder der Aufheizeinrichtung 10 durch einen Deckel 12 verschlossen. Dieser weist bevorzugt einen insgesamt im Wesentlichen kreisscheibenförmigen Grundriss auf.

Das Gargefäß 8 weist eine vom Bodenbereich sich in Vertikalrichtung nach oben erstreckende Gefäßwandung 13 auf, die gefäßöffnungsseitig bevorzugt in einen nach radial außen abragenden Gefäßrand 14 übergeht. Letzterer ist mit Bezug auf einen Vertikalschnitt bevorzugt kreislinienabschnittförmig gebildet, weiter bevorzugt halbkreislinienförmig, mit einer nach vertikal oben gerichteten Wölbungsfläche.

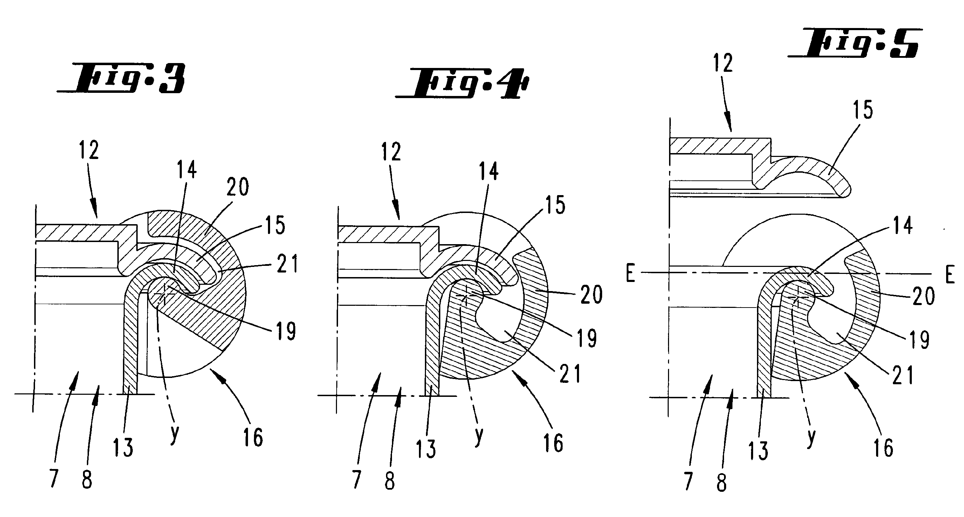

Der Deckel 12 weist weiter bevorzugt einen radial nach außen sich erstreckenden, umlaufenden Deckelrand 15 auf. Dieser erstreckt sich mit Bezug auf einen Vertikalschnitt bevorzugt angepasst an den Gefäßrand 14 kreislinienabschnittförmig, weiter bevorzugt in Zuordnungsstellung des Deckels 12 unter konzentrischem Verlauf zu dem Gefäßrand 14. In Zuordnungsstellung stützt sich der Deckel 12 über dessen Deckelrand 15 auf dem Gefäßrand 14 ab (vgl. Figur 4).

Wenngleich nicht dargestellt, ist an dem Deckel 12 oder im Bereich des Gefäßrandes 14 bevorzugt eine Dichtung vorgesehen, insbesondere zur fluiddichten Anordnung des Deckels 12 auf dem Gargefäß 8. In üblicher Weise besteht eine solche Dichtung bevorzugt aus einem Weichkunststoffmaterial, beispielsweise aus einem thermoplastischen Elastomer.

Insbesondere im Betrieb der Küchenmaschine 1, weiter insbesondere im Rührwerk- und/oder Heizbetrieb ist der auf das Gargefäß 8 aufgesetzte Deckel 12 zu verriegeln, da im Betrieb der Küchenmaschine 1 gegebenenfalls hohe Kräfte beispielsweise durch einen Zerkleinerungsprozess mittels des Rührwerkes 7 und/oder durch eine Fluiddynamik im Gargefäß 8 entstehen können. Hierzu weist die Küchenmaschine 1 mindestens ein Verriegelungsteil 16 auf, welches den Deckel 12 gegen das Gargefäß 8 verriegelt. Dieses Verriegelungsteil 16 ist bevorzugt langgestreckt, wellenartig ausgebildet, mit einer zentralen, in Längserstreckung ausgerichteten Achse, welche zugleich eine Drehachse y des Verriegelungsteiles 16 darstellt.

Das Verriegelungsteil 16 ist derart angeordnet, dass dieses mit Bezug auf eine Draufsicht den Gargefäßrand 14 sowie in Zuordnungsstellung den Deckelrand 15 sekantenartig schneidet. Ein Ende des Verriegelungsteiles 16 ist bevorzugt über einen Wellenstumpf 17 mit einem in der Küchenmaschine 1 angeordneten Elektromotor 18 verbunden. Über den Wellenstumpf 17 ist das Verriegelungsteil 16 an der Küchenmaschine 1 um die Achse y drehbar festgelegt, dies weiter bei bevorzugt insgesamt frei auskragender Anordnung desselben.

Das Verriegelungsteil 16 formt einen Aufsetzbereich 19 aus, auf welchem in entsprechender Zuordnungsstellung der Gefäßrand 14 aufliegt. Der Aufsetzbereich 19 ist überfangen von einem Übergreifabschnitt 20, wobei zwischen dem Übergreifabschnitt 20 und dem Aufsetzbereich 10 ein Höhlungsabschnitt 21 verbleibt. Dieser Höhlungsabschnitt 21 ist mit Bezug auf einen Vertikalschnitt gemäß Figur 3 so ausgebildet, dass in diesen in der Verriegelungsstellung gemäß Figur 3 sowohl der Deckelrand 15 als auch der Gefäßrand 14 eintauchen können. In der Verriegelungsstellung gemäß Figur 3 sind entsprechend sowohl der Gefäßrand 14 als auch der Deckelrand 15 von dem Übergreifabschnitt 20 überfangen, womit der Deckel 12 gegen ein Abheben in vertikaler Richtung gesichert ist.

Bezüglich weiterer Merkmale hinsichtlich der Verriegelung des Deckels 12, insbesondere hinsichtlich der Ausgestaltung und Wirkungsweise des Verriegelungsteiles 16 wird auf die eingangs aufgeführte deutsche Patentanmeldung DE 10 2010 037 892 verwiesen.

Die elektromotorische Verdrehung des Verriegelungsteiles 16 in die Verriegelungsstellung gemäß Figur 3 erfolgt bevorzugt selbsttätig ausgelöst durch die Küchenmaschine 1, weiter bevorzugt in dem Fall, dass der Benutzer über den Regler 3 bzw. Taster 4 das Rührwerk 9 bzw. die Aufheizeinrichtung 10 in Betrieb nimmt. Während des Betriebs bleibt die Deckelverriegelung aktiviert. Erst mit Ausschalten sowohl des Rührwerkes 9 als auch weiter bevorzugt der Aufheizeinrichtung 10 erfolgt bevorzugt selbsttätig ausgelöst durch die Küchenmaschine 1 die Rückverdrehung des Verriegelungsteiles 16 in die Deckelfreigabestellung gemäß Figur 4.

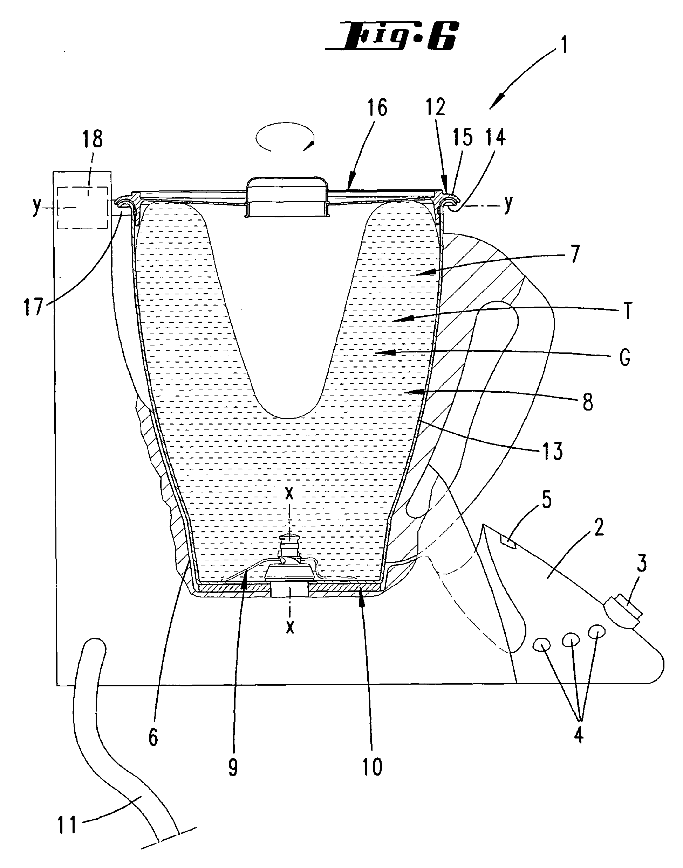

Während der Zubereitung eines Gargutes G in dem Gargefäß 8 bildet sich insbesondere zufolge Dreheinwirkung über das Rührwerk 9 in dem Gargefäß 8 eine Trombe T, welche abhängig von verschiedenen Parametern gegen die Innenseite des Deckels 12 drücken kann (vgl. Figur 6). Diese Parameter sind insbesondere die Rührwerkdrehzahl, weiter bevorzugt auch die Heiztemperatur und/oder die Garguttemperatur im Gargefäß 8, darüber hinaus weiter bevorzugt die Menge (Füllhöhe) und/oder die Konsistenz des Gargutes 8, was sich beispielsweise aus der Stromaufnahme des das Rührwerk 9 antreibenden Elektromotors ableiten lässt.

Diese Trombe T bildet sich, insbesondere abhängig von den vorbezeichneten Parametern, nach einem Abschalten der Küchenmaschine 1, insbesondere nach einem Abschalten des Rührwerkes 9 relativ langsam zurück, bricht entsprechend nicht schlagartig in sich zusammen. Während dieser Tromben-Rückbildungszeit bleibt die Verriegelung des Deckels 12 bestehen. Erst nach vollständigem Abbau der Trombe T oder alternativ erst bis zum Abbau der Trombe T auf ein Höhenniveau des Gargutes G, welches nicht mehr die Gefahr eines Herausspritzens von Gargut G nach Abnahme des Deckels 12 zur Folge hat, erfolgt eine Freigabe der Verrieglung des Deckels 12, insbesondere mit Bezug auf das dargestellte Ausführungsbeispiel, eine Drehverlagerung des Verriegelungsteiles 16 in die Deckelfreigabestellung gemäß Figur 4.

Zur zumindest annähernden Ermittlung der Zeitspanne, in welcher sich die Trombe T nach Abschalten des Rührwerkes 9 zurückgebildet hat, wird unter Nutzung der erfassten und abgespeicherten Daten, insbesondere Rührwerk- und/oder Aufheizdaten vorgenommen, wobei weiter bevorzugt insbesondere die abgespeicherten Daten in einem vorgegebenen Zeitraum von bevorzugt einer Sekunde bis eine Minute vor Abschalten insbesondere des Rührwerkes 9 genutzt werden. Diese Daten werden bevorzugt unter Nutzung einer Auswerte- und Steuerungselektronik der Küchenmaschine 1 mit vorgegebenen, empirisch ermittelten und bevorzugt in der Küchenmaschine 1 hinterlegten Daten verglichen, aus welcher bevorzugt so hinterlegten Abgleichtabelle die Zeitspanne At errechenbar ist, die benötigt wird, um die Trombe T zurückzubilden. Somit ist sichergestellt, dass mit einer Freigabe des Deckels 12 zufolge bevorzugt durch die Küchenmaschine 1 selbsttätig herbeigeführte Drehverlagerung des Verriegelungsteiles 16 in die Freigabestellung kein Gargut G zufolge der noch wirkenden Zentrifugalkräfte herausspritzt. Durch die Nutzung der Tabelle mit vorgegebenen, bevorzugt empirisch ermittelten Daten wird zudem eine unnötige Wartezeit für den Benutzer über die erforderliche Zeitspanne zum Abbau der Trombe T hinaus vermieden.

Alternativ oder auch kombinativ zur Berücksichtigung der Rührwerkdrehzahl vor Abschalten des Rührwerkes 9 fließt bevorzugt auch die Temperatur des Gargutes G vor einem Abschalten der Aufheizeinrichtung 10 in die Berechnung der Zeitspanne bis zur Freigabe des Deckels 12 ein. Hierdurch wird vermieden, dass mit Abnahme des Deckels 12 noch kochendes Gargut G aus dem Gargefäßinneren herausspritzt.

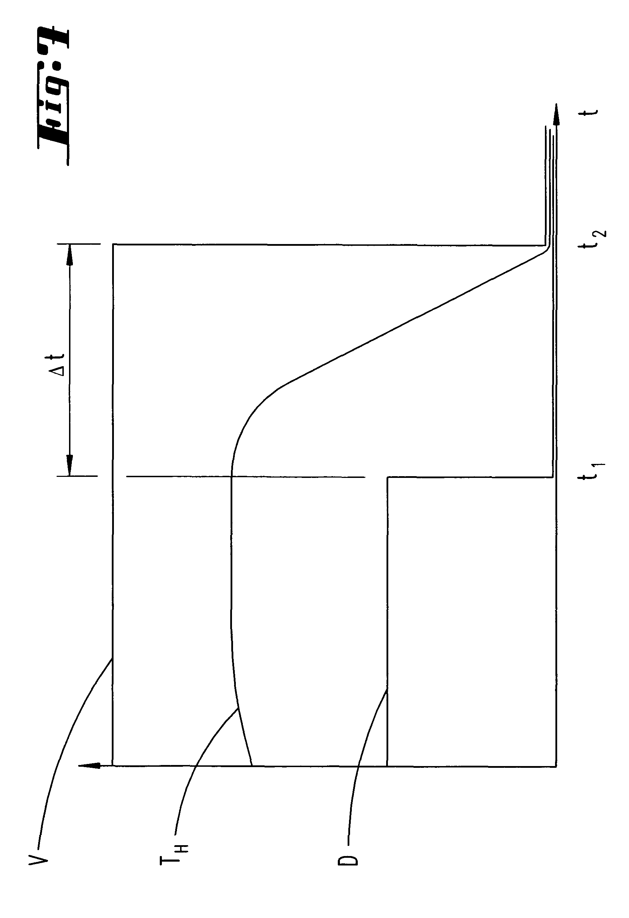

In Figur 7 ist schematisch das vorbeschriebene Verfahren dargestellt. Zu einem Zeitpunkt t₁ wird bevorzugt durch den Benutzer, alternativ programmgesteuert durch die Küchenmaschine, die Drehzahl D des Rührwerks 9 auf Null gesetzt. Die sich zuvor gebildete Trombe T benötigt bis zum Zeitpunkt t₂ um aus einer maximalen Trombenhöhe T_{H} einzubrechen. Der Vergleich der zuvor ermittelten und abgespeicherten Daten, insbesondere Drehzahldaten, mit den vorliegenden, empirisch ermittelten Daten führt zu einer Berechnung des Trombennachlaufs, dessen Wert bevorzugt gleich oder zumindest annähernd gleich ist, bevorzugt unter Berücksichtigung einer Toleranz von ± 3 bis 10 %, weiter bevorzugt 5 % der Zeitspanne At zwischen dem Ausschaltzeitpunkt t₁ des Rührwerks und des Trombenberuhigungszeitpunkts t₂, so dass frühestens zum Zeitpunkt t₂, bevorzugt zum Zeitpunkt t₂ eine Deckelfreigabe erfolgt.

Die vorgeschlagene Lösung zeichnet sich insbesondere dadurch aus, dass allein mit vorhandenen Informationen (erfasste und abgespeicherte Daten insbesondere der Rührwerkdrehzahlen und/oder der Aufheizdaten) der Benutzer von unnötiger Wartezeit befreit ist, das Arbeiten mit der Küchenmaschine 1 effektiver und angenehmer gestaltet ist, ohne hierbei die Sicherheit im Zuge der Deckelabnahme zu reduzieren.

### Bezugszeichenliste

- 1: Küchenmaschine
- 2: Bedienfeld
- 3: Regler
- 4: Taster
- 5: Display
- 6: Gargefäßaufnahme
- 7: Zubereitungsgefäß
- 8: Gargefäß
- 9: Rührwerk
- 10: Aufheizeinrichtung
- 11: Netzanschlusskabel
- 12: Deckel
- 13: Gefäßwandung
- 14: Gefäßrand
- 15: Deckelrand
- 16: Verriegelungsteil
- 17: Wellenstumpf
- 18: Elektromotor
- 19: Aufsetzbereich
- 20: Übergreifabschnitt
- 21: Höhlungsabschnitt

- d: Drehzahl
- G: Gargut
- T: Thrombe
- T_{H}: Thrombenhöhe
- V: Verriegelung

- t: Zeit
- t₁: Zeitpunkt
- t₂: Zeitpunkt
- Δt: Zeitspanne
- x: Zentralachse
- y: Drehachse

## Patentansprüche

1. Verfahren zur Freigabe eines Deckels (12) eines Zubereitungsgefäßes (7), insbesondere eines mit einem Rührwerk (9) versehenen und/ oder aufheizbaren Gargefäßes (8), wobei Rührwerk- und/oder Aufheizdaten erfassbar und abspeicherbar sind, **dadurch gekennzeichnet, dass** die Freigabe des Deckels (12) in Abhängigkeit einer Auswertung der aufgezeichneten Daten, betreffend einen vorgegebenen Zeitraum, vorgenommen wird.

2. Verfahren nach Anspruch 1, **dadurch gekennzeichnet, dass** die gespeicherten Daten mit vorgegebenen, empirisch ermittelten Daten verglichen werden.

3. Küchenmaschine (1) mit einem Gargefäß (8) und einem Rührwerk (9) in dem Gargefäß (8) und/oder einer Aufheizeinrichtung (10) zum Aufheizen des in dem Gargefäß (8) befindlichen Garguts (G), wobei Rührwerk-und/ oder Aufheizdaten erfassbar und abspeicherbar sind, wobei weiter eine Einrichtung zur Freigabe einer Verriegelung eines das Gargefäß (8) abdeckenden Deckels (12) vorgesehen ist, **dadurch gekennzeichnet, dass** ausgehend von einem Ereignis, insbesondere einem Abschalten des Rührwerks (9) und/ oder der Aufheizeinrichtung (10) der Küchenmaschine (1), von der Küchenmaschine (1) eine Zeitspanne errechenbar ist, nach welcher die Freigabe der Verriegelung des Deckels (12) erfolgt.

4. Küchenmaschine nach Anspruch 3, **dadurch gekennzeichnet, dass** die gespeicherten Daten mit vorgegebenen, empirisch ermittelten Daten verglichen werden.

## Claims

1. Method for releasing a lid (12) of a preparation vessel (7), in particular a cooking vessel (8) which is provided with an agitator (9) and/or can be heated, agitator and/or heating data being able to be acquired and saved, **characterised in that** the lid (12) is released according to an evaluation of the recorded data relating to a predefined time period.

2. Method according to claim 1, **characterised in that** the saved data is compared with predefined, empirically determined data.

3. Kitchen appliance (1) comprising a cooking vessel (8) and an agitator (9) in the cooking vessel (8) and/or a heating device (10) for heating the food to be cooked (G) located in the cooking vessel (8), agitator and/or heating data being able to be acquired and saved, a device for unlocking a lid (12) covering the cooking vessel (8) further being provided, **characterised in that**, proceeding from an event, in particular switching off of the agitator (9) and/or the heating device (10) of the kitchen appliance (1), the kitchen appliance (1) can calculate a time period after which the lid (12) is unlocked.

4. Kitchen appliance according to claim 3, **characterised in that** the saved data are compared with predefined, empirically determined data.

## Revendications

1. Méthode pour la libération d'un couvercle (12) de récipient pour préparation (7) en particulier avec un mécanisme d'agitation (9) et/ou un récipient de cuisson (8) dans lequel des données sur l'agitateur et/ou le chauffage sont mesurables et stockables, **caractérisé en ce que** la libération du couvercle (12) est réalisée en fonction d'une évaluation des données enregistrées pour une période donnée.

2. Procédé selon la revendication 1, **caractérisé en ce que** les données stockées sont comparées avec des données préalablement déterminées empiriquement.

3. Robot ménager (1) avec un récipient de cuisson (8) et un mélangeur (9) dans le récipient de cuisson (8) et/ou un dispositif de chauffage (10) pour chauffer les produits de cuisson (G) se trouvant dans le récipient de cuisson (8) comprenant en outre des moyens pour libérer le verrouillage du couvercle (12) du récipient de cuisson (8), **caractérisé en ce qu'**à partir d'un incident, en particulier une coupure de l'agitateur (9) et/ou du dispositif de chauffage (10) du robot ménager, au calcul une période de temps, après quoi, la libération du verrouillage du couvercle (12) a lieu.

4. Robot de cuisine selon la revendication 3, **caractérisé en ce que** les données stockées sont comparées avec des données, préalablement déterminées empiriquement
